# EUROPEAN PATENT APPLICATION

(11) **EP 2 626 667 A1**
(43) Date of publication of application: **14.08.2013**
(21) Application number: 11830441.9
(22) Date of filing: 15.08.2011
(51) Int. Cl.: G01C 21/08, G01C 17/32, G01C 21/12, G01C 22/00

(54) **TRAVEL TRACK SENSING DEVICE**

(30) Priority: 07.10.2010 JP 2010227351
(71) Applicant: Alps Electric Co., Ltd., Tokyo 145-8501 (JP)
(72) Inventor: YAMADA, Yukimitsu, Tokyo 145-8501 (JP)
(74) Representative: Klunker, Hans-Friedrich
(86) International application number: PCT/JP2011/068514
(87) International publication number: WO 2012/046508

(57) **Abstract**

[PROBLEM TO BE SOLVED] To provide a movement locus detector capable of detecting the movement locus at the both low speed and high speed by using a magnetic detection section and an acceleration detection section.

[SOLUTION] In the movement locus detector, a standard X-axis, a standard Y-axis, and a standard Z-axis are preliminarily being decided, and a magnetic detection section 2 for detecting magnetism in each axis direction and an acceleration detection section 12 for detecting the acceleration in each axis direction are mounted. At the low speed running, a movement distance is obtained from the number of footsteps detected by the acceleration detection section 12, and a movement locus is obtained from an azimuth of a geomagnetic vector detected by the magnetic detection section 2. At the high speed running, an angular velocity change of the geomagnetic vector is detected from the magnetic detection section 2, and the movement locus is obtained from the detection output.

## Description

### TECHNICAL FIELD

The present invention relates to a movement locus detector which detects a change of a locus at the time of running, particularly, to a movement locus detector which is capable of detecting a movement locus at both low speed and high speed by using a magnetic detection section that detects geomagnetism.

### BACKGROUND ART

In a movement locus detector mounted in a navigation system, direction detecting means for detecting a change in a movement locus direction and distance detecting means for detecting a movement distance are mounted.

While a vibration type gyroscope as the direction detecting means has been known, the vibration type gyroscope is a large-sized apparatus and has high power consumption. For these reasons, while the vibration type gyroscope is suitable for a large -sized navigation system such as a car navigation system, the vibration type gyroscope is difficult to be provided in a small-sized portable device, and a life span of a battery mounted in the portable device is reduced.

In addition, while there is a GPS system as means for detecting a direction and a position, a GPS sensor also needs an antenna so that the size of the portable device is increased, and since a GPS radio wave does not reach or becomes very weak inside an underground shopping complex, a station, an airport and, further, inside a building, it is difficult to detect an accurate position in these places.

A current position display apparatus disclosed in PTL 1 below employs a first direction detector using a rate type gyroscope which outputs a signal of a relative direction proportional to variations in a vibration direction of a mobile object, and a second direction detector using a geomagnetic sensor which outputs a signal of the absolute direction by geomagnetism. The current position display apparatus detects a current position from an azimuth of the geomagnetism using the second direction detector at the time of power application and switches a detection output from the second direction detector to that from the first direction detector when the first direction detector is activated and the output becomes stable.

### CITATION LIST

### PATENT LITERATURE

[PTL 1] Japanese Examined Patent Application Publication No. 1-48486

### DISCLOSURE OF THE INVENTION

### PROBLEMS TO BE SOLVED BY THE INVENTION

While the geomagnetic sensor disclosed in PTL 1 has a geomagnetic sensor capable of detecting an azimuth at the time of power application, the rate type gyroscope is further mounted therein other than the geomagnetic sensor so that the apparatus is complicated and a circuit configuration is also complicated.

The present invention is made to solve the above problems in the related art and an object is to provide a movement locus detector capable of detecting a movement locus at both low speed and high speed and capable of detecting the movement locus with a simple configuration and low power consumption by detecting geomagnetism with a magnetic sensor.

### MEANS FOR SOLVING THE PROBLEMS

According to the present invention, there is provided a movement locus detector including a magnetic detection section; and an operation section, wherein a standard three dimensional coordinate having a standard X-axis, a standard Y-axis and a standard Z-axis orthogonal to each other is set, the magnetic detection section has an X-axis magnetic sensor which detects a magnetic component of the standard X-axis, a Y-axis magnetic sensor which detects a magnetic component of the standard Y-axis, and a Z-axis magnetic sensor which detects a magnetic component of the standard Z-axis, a direction of a geomagnetic vector is obtained as coordinate point data on the standard three dimensional coordinate based on detection outputs of the X-axis magnetic sensor, the Y-axis magnetic sensor and the Z-axis magnetic sensor in the operation section, and a low speed locus operation mode in which an azimuth of the geomagnetic vector from the coordinate point data is obtained and a movement locus is operated from the change of the azimuth, and a high speed locus operation mode in which an angular velocity is obtained from the coordinate point data moving on the standard three dimensional coordinate and the movement locus is operated from the change of the angular velocity are switched to be set.

The movement locus detector of the present invention is capable of detecting a movement position based on the geomagnetic vector at both low speed and high speed by detecting a geomagnetic vector by the magnetic detection section. Therefore, it is possible to detect the movement position with a simple configuration and low power consumption. In addition, the movement locus detector can be used even inside an underground shopping complex or a building in which a GPS radio wave does not reach.

The movement locus detector further includes an acceleration detection section, wherein the acceleration detection section has an X-axis acceleration sensor which detects an acceleration component of the standard X-axis, a Y-axis acceleration sensor which detects an acceleration component of the standard Y-axis, and a Z-axis acceleration sensor which detects an acceleration component of the standard Z-axis, and the number of footsteps from the acceleration change in the gravity direction detected by the acceleration detection section is counted to obtain a movement distance in the low speed locus operation mode, and a movement distance is obtained from the acceleration change in the running direction detected by the acceleration detection section in the high speed locus operation mode.

In the movement locus detector, the azimuth of the geomagnetic vector is obtained from a gravity acceleration direction detected by the acceleration detection section and the coordinate point data in the low speed locus operation mode.

In the movement locus detector, since a gravity direction is known in the acceleration detection section at the low speed running during walking, it is possible to know the azimuth and the change of the azimuth based on the geomagnetic vector detected by the magnetic detection section to obtain the movement locus. Moreover, since the gravity direction in the acceleration detection section is known, the number of footsteps is counted and the movement distance also can be detected. On the other hand, at the time of the high speed running, the acceleration detection section detects acceleration during straight running and the movement distance can be known. In addition, since centrifugal force is applied to the acceleration detection section during rotation at the high speed running and the gravity direction cannot be known, the angular velocity is detected from the locus of the coordinate point data of the geomagnetic vector to detect the movement position at this time.

In this manner, a running position can be detected at all times using the magnetic detection section and the acceleration detection section.

In the movement locus detector, the low speed locus operation mode and the high speed locus operation mode are switched based on the magnitude of the acceleration detected by the acceleration detection section in the operation section.

For example, when the magnitude of the acceleration detected by the acceleration detection section is larger than gravity acceleration, switching to the high speed locus operation mode is performed in the operation section.

As described above, the low speed locus operation mode and the high speed locus operation mode are automatically switched by using the acceleration sensor so that a movement locus can be detected in the optimum mode at all times.

### Advantageous Effects of Invention

The movement locus detector can detect the movement locus at both low speed and high speed by detecting the geomagnetic vector with the magnetic detection section. Therefore, the movement locus can be detected with low power consumption, and the movement locus detector can be used inside an underground shopping complex and inside a building, as long as it is an area that geomagnetism can reach.

### BRIEF DESCRIPTION OF THE DRAWINGS

Fig. 1 is a circuit block diagram of a movement locus detector according to an embodiment of the present invention.
Fig. 2 is a block diagram for describing a function of an operation section provided in the movement locus detector shown in Fig. 1.
Fig. 3 is an explanatory diagram showing a detection operation by an acceleration detection section.
Fig. 4 is an explanatory diagram of an X-axis magnetic sensor, a Y-axis magnetic sensor and a Z-axis magnetic sensor provided in the magnetic detection section.
Fig. 5 is an explanatory diagram of a standard three dimensional coordinate showing a detection operation of a geomagnetic vector.
Fig. 6 is an explanatory diagram showing an operation example in which an angular velocity is obtained from a geomagnetic vector detected by the magnetic detection section.
Fig. 7 is an explanatory diagram showing another operation example in which an angular velocity is obtained from a geomagnetic vector detected by the magnetic detection section.
Fig. 8 is an explanatory diagram of a detection operation of a locus at low speed running.
Fig. 9 is an explanatory diagram of a detection operation of a locus at high speed running.

### BEST MODE FOR CARRYING OUT THE INVENTION

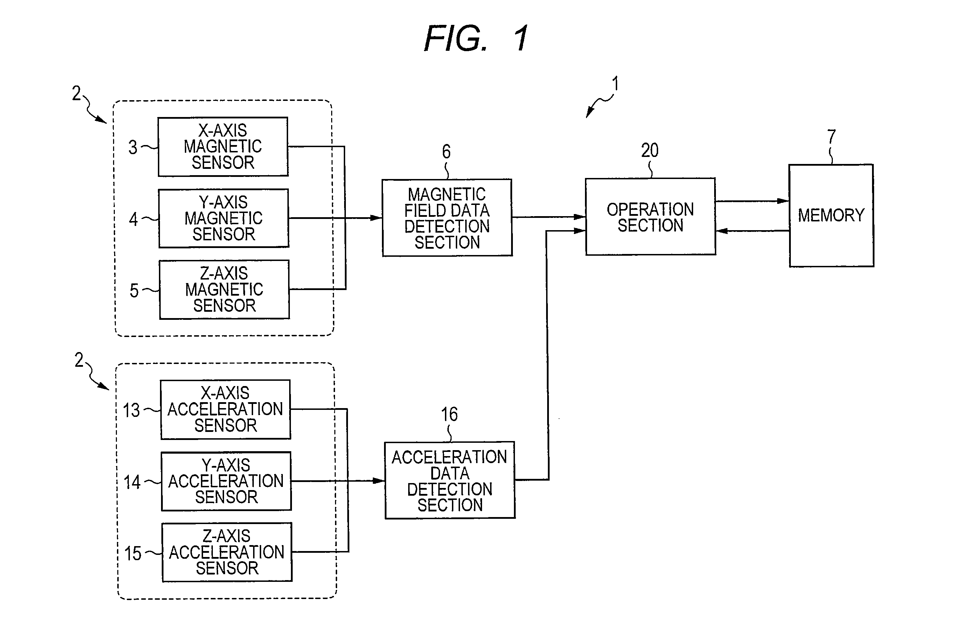

A movement locus detector 1 according to an embodiment of the present invention shown in Fig. 1 is mounted in a portable device and is capable of detecting a movement locus at both low speed running while walking and high speed running while riding in a vehicle and the like.

The movement locus detector 1 includes a magnetic detection section 2 for detecting geomagnetism and an acceleration detection section 12 for detecting acceleration.

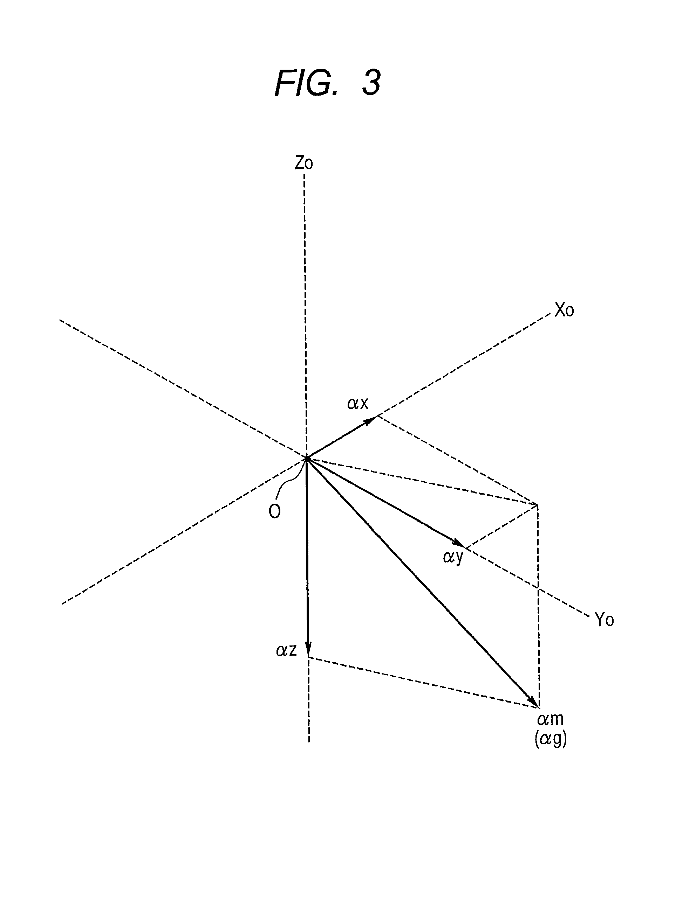

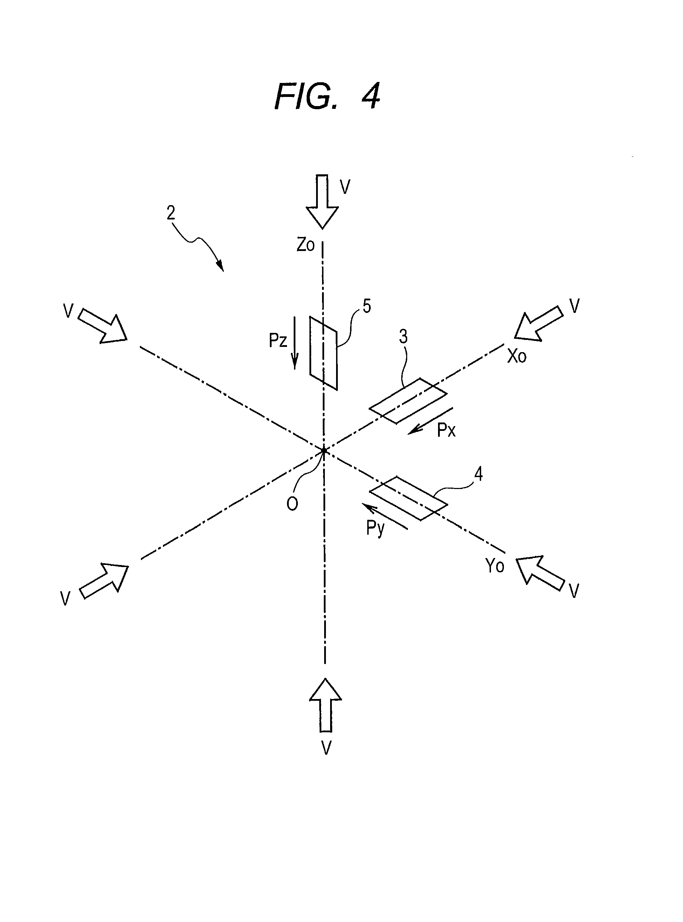

As shown in Figs. 3 and 4, a standard three dimensional coordinate is set in the movement locus detector 1. In the standard three dimensional coordinate, a standard X-axis (X0 axis), a standard Y-axis (Y0 axis) and a standard Z-axis (Z0 axis) are orthogonal to each other and an intersection point thereof is the origin O. The movement locus detector 1 can freely move in a space while maintaining an orthogonal relationship of the standard X-axis, the standard Y-axis and the standard Z-axis.

As shown in Fig. 1, the acceleration detection section 12 has an X-axis acceleration sensor 13, a Y-axis acceleration sensor 14 and a Z-axis acceleration sensor 15.

The X-axis acceleration sensor 13 has a sensor that mainly detects mass moving along the standard X-axis, and a movement distance of the mass. The Y-axis acceleration sensor 14 has a sensor that mainly detects mass moving along the standard Y-axis, and a movement distance of the mass. The Z-axis acceleration sensor 15 has a sensor that mainly detects mass moving along the standard Z-axis, and a movement distance of the mass.

As shown in Fig. 1, a detection output detected by the X-axis acceleration sensor 13, the Y-axis acceleration sensor 14 and the Z-axis acceleration sensor 15 is imparted to an acceleration data detection section 16. When the detection output proportional to the movement distance of the mass detected by the sensors of the respective acceleration sensors 13, 14 and 15 is imparted to the acceleration data detection section 16, acceleration components in the respective directions of a standard X-axis direction, a standard Y-axis direction and a standard Z-axis direction are obtained in the acceleration data detection section 16.

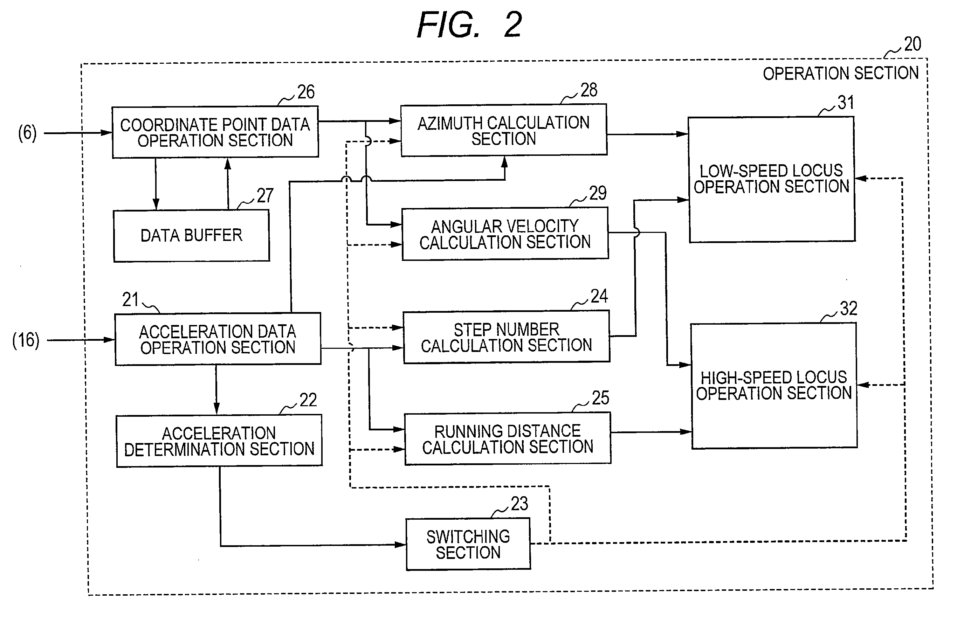

As shown in Fig. 2, an operation section 20 is mainly configured by a CPU and the CPU executes a control flow by bringing up software stored in a memory 7. Fig. 2 shows that a processing area of the software executed in the CPU of the operation section 20 is divided for each functional section.

The detection output of the acceleration components in the respective directions of the standard X-axis, the standard Y-axis and the standard Z-axis obtained by the acceleration data detection section 16 is converted into a digital value in the operation section 20 and imparted to an acceleration data operation section 21 that is a part of the operation section 20. In the acceleration data operation section 21, the acceleration imparted to the movement locus detector 1 is operated from the acceleration components in the three directions.

Fig. 3 shows a state in which an acceleration component αx of the standard X-axis direction, an acceleration component αy of the standard Y-axis direction and an acceleration component αz of the standard Z-axis direction are detected by the respective acceleration sensors 13, 14 and 15. In the acceleration data operation section 21, the respective acceleration components αx, αy and αz are combined and an acceleration vector αm is obtained. The acceleration vector αm shows a direction of acceleration on the standard three dimensional coordinate and also shows the magnitude of acceleration.

When a portable device in which the movement locus detector 1 is mounted is stopped, the direction of the acceleration vector αm means a gravity action direction, and the absolute value of the acceleration vector αm is equal to the absolute value (9.8 m/sec²) of gravity acceleration αg.

As shown in Fig. 2, the operation section 20 has an acceleration determination section 22. The acceleration determination section 22 compares the absolute value of the acceleration vector αm operated by the acceleration data operation section 21 in Fig. 3 with the absolute value (9.8 m/sec²) of the gravity acceleration αg.

When the acceleration determination section 22 determines that the absolute value of the acceleration vector αm is almost equal to the gravity acceleration, that is, a predetermined width (± γ% (for example, ± 3% or ± 5%)) is imparted to the gravity acceleration, and the absolute value of the acceleration vector αm is within the width (within a range of gravity acceleration ± γ%), it is determined that the portable device in which the movement locus detector 1 is mounted is stopped or moved at a low speed. At this time, a switching section 23 operates and a low speed locus operation mode is set by a low speed locus operation section 31. When it is determined that the absolute value of the acceleration vector exceeds the acceleration plus γ% of the gravity, the portable device is determined to move at a high speed and the switching section 23 operates to set a high speed locus operation mode by a high speed locus operation section 32.

As shown in Fig. 2, the operation section 20 has a step number calculation section 24 and a running distance calculation section 25. When the switching section 23 sets the low speed locus operation mode, and the acceleration vector αm operated by the acceleration data operation section 21 is periodically changed, that is, when the acceleration vector αm is within the range of gravity acceleration ± γ% and the acceleration vector αm is regularly changed, the step number calculation section 24 operates. The step number calculation section 24 determines a single period of the change of the acceleration vector αm as one step during running and counts the number of footsteps.

When the switching section 23 sets the high speed locus operation mode, the running distance calculation section 25 calculates a running distance from the change of the absolute value of the acceleration vector αm shown in Fig. 3. That is, when the absolute value of the acceleration vector αm exceeds the gravity acceleration plus γ%, the change of the absolute value of the acceleration vector αm is obtained in the running distance calculation section 25, and running acceleration is obtained from the change. The running acceleration is integrated twice by time to calculate the movement distance.

As shown in Fig. 1, the magnetic detection section 2 has an X-axis magnetic sensor 3, a Y-axis magnetic sensor 4 and a Z-axis magnetic sensor 5. As shown in Fig. 4, the X-axis magnetic sensor 3 is fixed along the standard X-axis (X0 axis), the Y-axis magnetic sensor 4 is fixed along the standard Y-axis (Y0 axis), and the Z-axis magnetic sensor 5 is fixed along the standard Z-axis (Z0 axis).

The X-axis magnetic sensor 3, the Y-axis magnetic sensor 4 and the Z-axis magnetic sensor 5 are constituted by a GMR element. The GMR element has a fixed magnetic layer and a free magnetic layer which are formed of a soft magnetic material formed of Ni-Co alloy or Ni-Fe alloy, and a nonmagnetic conductive layer such as copper sandwiched between the fixed magnetic layer and the free magnetic layer. An antiferromagnetic layer is laminated below the fixed magnetic layer and magnetization of the fixed magnetic layer is fixed by antiferromagnetic coupling of the antiferromagnetic layer and the fixed magnetic layer.

The X-axis magnetic sensor 3 is to detect a component directed in the standard X-axis (X0 axis) of geomagnetism and is fixed in a PX direction in which the direction of the magnetization of the fixed magnetic layer is a direction following the standard X-axis. The direction of magnetization of the free magnetic layer varies in accordance with the direction and the magnitude of the geomagnetism. When the direction of the magnetization of the free magnetic layer becomes parallel to the PX direction, a resistance value of the X-axis magnetic sensor 3 becomes the minimum, and when the direction of the magnetization of the free magnetic layer becomes the opposite direction to the PX direction, the resistance value of the X-axis magnetic sensor 3 becomes the maximum. Further, when the direction of the free magnetic layer is orthogonal to the PX direction, the resistance value becomes an average value of the maximum value and the minimum value.

In a magnetic field data detection section 6 shown in Fig. 1, the X-axis magnetic sensor 3 and a fixed resistance are connected in series, and voltage is applied to a series circuit of the X-axis magnetic sensor 3 and the fixed resistance, so that the voltage between the X-axis magnetic sensor 3 and the fixed resistance is extracted as a detection output of the X-axis. When a magnetic field that is directed to the standard X-axis is not imparted to the X-axis magnetic sensor 3 or when a magnetic field orthogonal to the PX direction is imparted to the X-axis magnetic sensor 3, the detection output of the X-axis becomes a midpoint voltage.

When the posture of the magnetic detection section 2 is changed, thereby making the fixed direction PX of the magnetization of the fixed magnetic layer of the X-axis magnetic sensor 3 have the same direction as the geomagnetic vector V, the magnetic field component which is imparted to the X-axis magnetic sensor 3 becomes the maximum. The detection output of the X-axis at this time becomes the maximum value on the positive side with respect to the midpoint potential. Conversely, when the fixed direction PX of the magnetization of the fixed magnetic layer of the X-axis magnetic sensor 3 has a direction opposite to the geomagnetic vector V, the magnetic field component of the opposite direction which is imparted to the X-axis magnetic sensor 3 becomes the maximum. The detection output of the X-axis at this time becomes the maximum value on the negative side with respect to the midpoint voltage.

The Y-axis magnetic sensor 4 and the Z-axis magnetic sensor 5 are connected with the respective fixed resistance in series and voltage is applied to a series circuit of the Y-axis magnetic sensor 4 or the Z-axis magnetic sensor 5 and the fixed resistance so that the midpoint voltage between the respective sensors and the fixed resistance is extracted as the detection output of the Y-axis or the detection output of the Z-axis.

When the fixed direction PY of the magnetization of the fixed magnetic layer of the Y-axis magnetic sensor 4 has the same direction as the geomagnetic vector V, the detection output of the Y-axis becomes the maximum value on the positive side with respect to the midpoint voltage. When the fixed direction PY of the magnetization of the fixed magnetic layer of the Y-axis magnetic sensor 4 has a direction opposite to the geomagnetic vector V, the detection output of the Y-axis becomes the maximum value on the negative side with respect to the midpoint voltage. In the same manner, when the fixed direction PZ of the magnetization of the fixed magnetic layer of the Z-axis magnetic sensor 5 has the same direction as the geomagnetic vector V, the detection output of the Z-axis becomes the maximum value on the positive side with respect to the midpoint voltage. When the fixed direction PZ of the magnetization of the fixed magnetic layer of the Z-axis magnetic sensor 5 has a direction opposite to the geomagnetic vector V, the detection output of the Z-axis becomes the maximum value on the negative side with respect to the midpoint voltage.

As long as the magnitude of the geomagnetic vector V is fixed, the absolute value of the maximum value on the positive side and the absolute value of the maximum value on the negative side are the same in the detection outputs from the X-axis magnetic sensor 3, the Y-axis magnetic sensor 4 and the Z-axis magnetic sensor 5.

As for the X-axis magnetic sensor 3, provided that the detection output on the positive side and the detection output on the negative side are obtained by the direction of the geomagnetic vector and the maximum value of the detection output on the positive side and the maximum value of the detection output on the negative side have the same absolute value, the X-axis magnetic sensor can be constituted by a magnetic sensor other than the GMR element. For example, a Hall element or a MR element which can detect only magnetic field strength on the positive side along the X-axis and a Hall element or a MR element which can detect only magnetic field strength on the negative side may be combined and used as the X-axis magnetic sensor 3. The same will apply to the Y-axis magnetic sensor 4 and the Z-axis magnetic sensor 5.

As shown in Fig. 1, the detection outputs of the X-axis, the Y-axis, and the Z-axis detected in the magnetic field data detection section 6 are imparted to an operation section 20. In the operation section 20, a clock circuit is provided, and the detection output of the X-axis, the detection output of the Y-axis, and the detection output of the Z-axis detected in the magnetic field data detection section 6 are intermittently read out to the operation section 20 in short cycles depending on a measurement time of the clock circuit.

The respective detection outputs are converted into digital values by an A/D conversion section provided in the operation section, and imparted to a coordinate point data operation section 26 shown in Fig. 2.

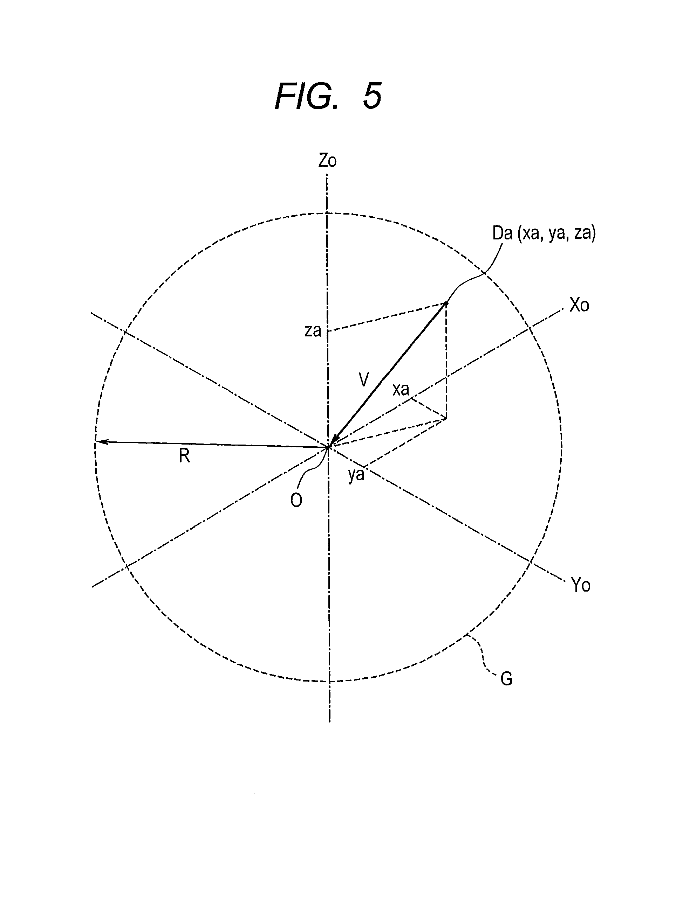

In the coordinate point data operation section 26, from the detection output of the X-axis, the detection output of the Y-axis and the detection output of the Z-axis, the geomagnetic vector V detected in the magnetic detection section 2 is converted into coordinate point data Dₐ on the standard three dimensional coordinate of X0-Y0-Z0 shown in Fig. 5. The detection output is continuously read out from the magnetic field data detection section 6 is converted into the coordinate point data Dₐ and stored in a data buffer (buffer memory) 27 in the operation section 20. The data buffer 27 sequentially stores the coordinate point data Dₐ which is sampled and operated in a short cycle in synchronization with the clock circuit and the oldest coordinate point data Dₐ is discarded every time new coordinate point data is stored. While the movement locus detector 1 operates, the newest coordinate point data Dₐ is operated and stored in the data buffer 11 in order.

As shown in Fig. 5, even when the magnetic detection section 2 is placed at any place on the sphere, the geomagnetic vector is detected by the respective magnetic sensors. From the magnetic field data detection section 6, an X-axis detection output xa is obtained based on the detection output from the X-axis magnetic sensor 3, a Y-axis detection output ya is obtained based on the detection output from the Y-axis magnetic sensor 4, and a Z-axis detection output za is obtained based on the detection output from the Z-axis magnetic sensor 5. In the coordinate point data operation section 26, the direction of the geomagnetic vector V is obtained as coordinate point data Dₐ (xa, ya, za) on the standard three dimensional coordinate based on the detection outputs xa, ya and za of each axis. The coordinate point data Dₐ (xa, ya, za) showing the geomagnetic vector V is continuously obtained in every sampling period and stored in the data buffer 27 in order.

The movement locus detector 1 performs calibration immediately after the power is applied or when the movement locus detector begins to be used. The calibration is performed based on an instruction displayed on a display of a portable device in which the movement locus detector 1 is mounted. The calibration is performed by rotating the movement locus detector 1 by a user in an arbitrary direction by several times. In the coordinate point data operation section 26, several pieces of coordinate point data Dₐ is continuously obtained in the calibration are sampled. At least three pieces of coordinate point data Dₐ is obtained so that a circle that matches the rotation locus of the coordinate point data Dₐ at that time can be specified. The plural circles are obtained and a center line perpendicular to a plane that passes the centers of the respective circles and includes the circles is obtained so that an intersection point of the plural center lines is obtained. In the coordinate point data operation section 26, correction is performed so that the intersection point becomes the origin O of the standard three dimensional coordinate of X0-Y0-Z0.

As shown in Fig. 5, as the result of the calibration processing, the coordinate point data Dₐ (xa, xb, xc) is expressed as a point on a standard spherical coordinate G which has the origin O of the standard three dimensional coordinate as a center. The radius of the standard spherical coordinate G is proportional to the absolute value of the geomagnetic vector V.

As shown in Fig. 2, the operation section 20 has an azimuth calculation section 28 and an angular velocity calculation section 29.
In the acceleration determination section 22 shown in Fig. 2, it is determined that the absolute value of the acceleration vector αm is almost equal to the magnitude of the gravity acceleration, when the switching to the low speed locus operation mode is performed in the switching section 23, the direction of the acceleration vector αm shown in Fig. 3 shows the gravity action direction. The detection of the acceleration component shown in Fig. 3 and the detection of the magnetic field component shown in Fig. 5 are based on the same standard three dimensional coordinate.

Accordingly, in the low speed locus operation mode, the absolute azimuth and change thereof in the movement locus detector 1 are obtained from the acceleration vector αm shown in Fig. 3 and the geomagnetic vector V shown in Fig. 5 in the azimuth calculation section 28. In the azimuth calculation section 28, a horizontal plane which is perpendicular to the acceleration vector αm showing the gravity direction and passes the origin O is set on the standard three dimensional coordinate, and the geomagnetic vector V is projected to the horizontal plane so that it is possible to know the north and south directions. Since a change of a movement angle of the projection line is known, it is possible to know the movement locus when the movement locus detector 1 is moved in the low speed locus operation mode.

When the movement locus detector 1 is moved at a high speed, the absolute value of the acceleration vector αm shown in Fig. 3 is larger than the gravity acceleration, and the gravity direction cannot be known. When the gravity direction is not known, the horizontal plane is not obtained from the acceleration vector αm so that it cannot be known what angle the geomagnetic vector V is rotated in the horizontal plane. In addition, when the movement locus detector 1 moves a rotational locus at a high speed, centrifugal force is applied to the acceleration vector αm detected by the acceleration detection section 12 so that the gravity direction becomes further unclear, and it is not known which direction acceleration acts on due to movement.

In the switching section 23, when the high speed locus operation mode is set, the angular velocity of the geomagnetic vector V is obtained and the movement locus of the movement locus detector 1 is obtained based on the change of the angular velocity in the angular velocity calculation section 29.

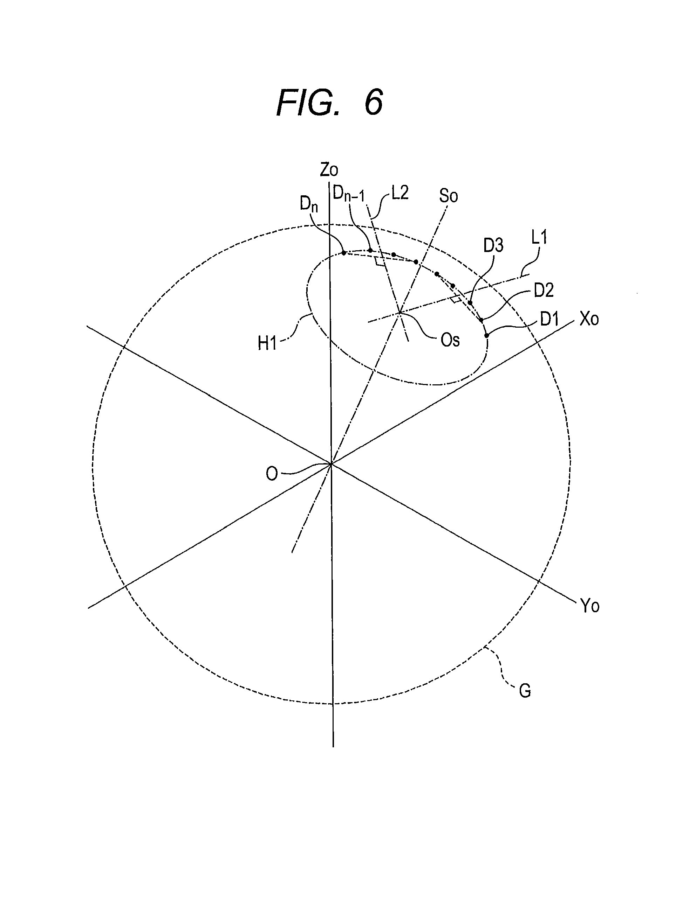

In the angular velocity calculation section 29, as shown in FIG. 6, the angular velocity is calculated using plural pieces of coordinate point data stored in the data buffer 27. In Fig. 6, D1 is the newest coordinate point data and coordinate point data which is retraced and sampled therefrom is D2, D3, D4, ... Dₙ₋₁ and Dₙ. In the angular velocity calculation section 29, a straight line which connects two pieces of coordinate point data close to the newest data and a first orthogonal line L1 orthogonal to the straight line are obtained. A straight line which connects other two pieces of coordinate point data obtained earlier than the two pieces of coordinate point data and a second orthogonal line L2 which crosses the straight line are obtained. Therefore, a center Os of a rotational locus circle H1 in which coordinate point data is moved from an intersection point of the two orthogonal lines L1 and L2 is obtained.

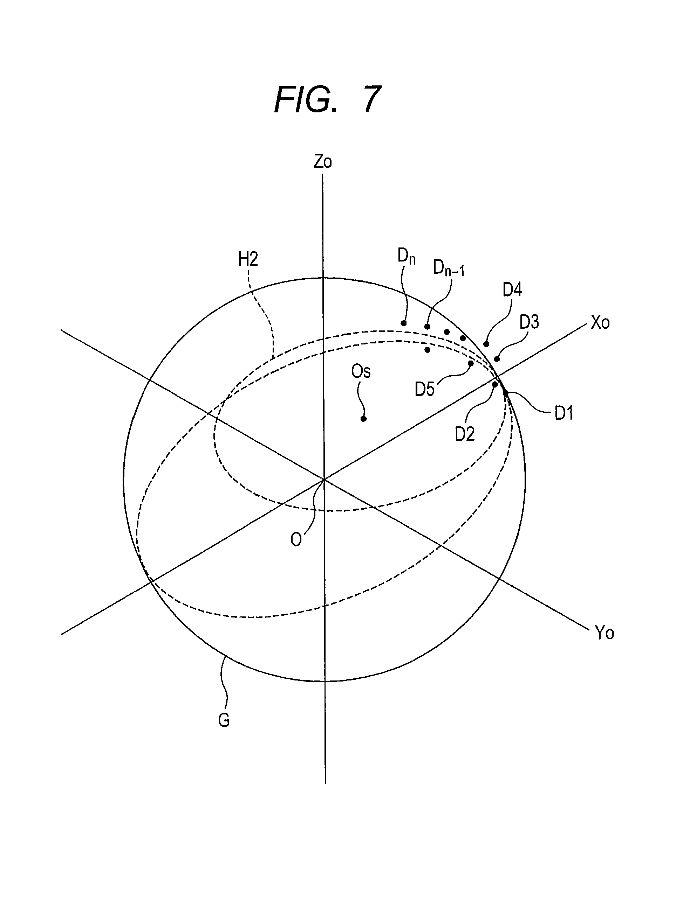

Alternatively, as shown in Fig. 7, plural candidate circles are predicted in advance and set on the standard three dimensional coordinate. The plural candidate circles are determined based on a fixed rule by changing the radii or changing angles from the origin O. Alternatively, the plural candidate circles are randomly determined. Errors of these candidate circles and the plural pieces of coordinate point data D1, D2, D3 ... are calculated using a least squares method, and the candidate circle having the smallest error is set as a rotational locus circle H2 to obtain the center Os.

In the angular velocity calculation section 29, an open angle of any two pieces of coordinate point data is obtained from the center Os of the rotational locus circle H1 specified by any of operations and is differentiated in the sampling time of the two pieces of coordinate point data to obtain the angular velocity. When the movement locus detector 1 is moved, new coordinate point data Da is continuously obtained and stored in the data buffer 27. By using the newest coordinate point data, or using the coordinate point data closed to the newest data, the angular velocity is repeatedly calculated so that the angular velocity of continuously changing coordinate point data and the change can be detected.

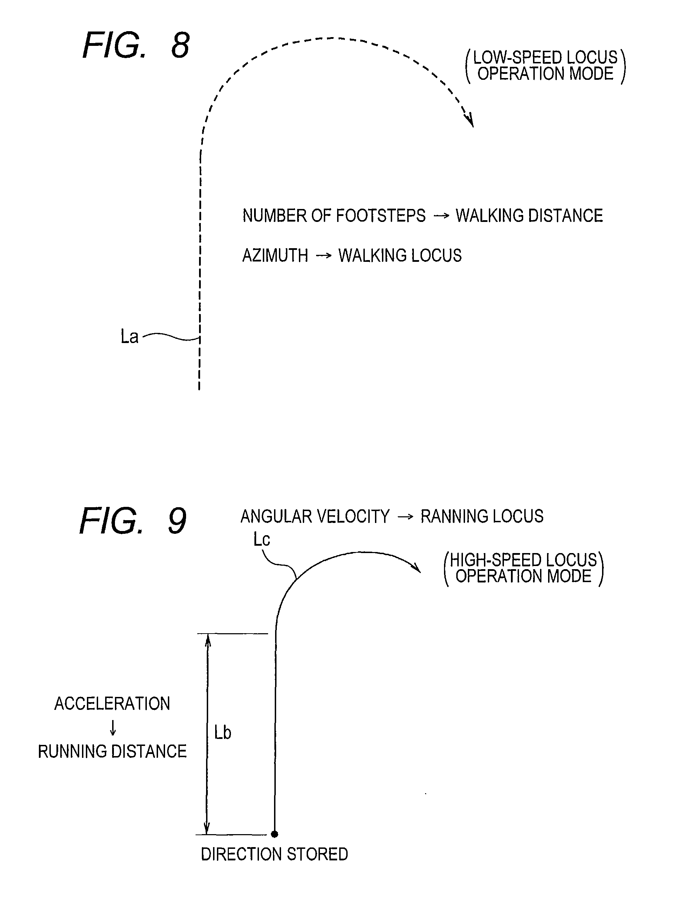

Fig. 8 shows the low speed locus operation mode set by the low speed locus operation section 31. In the low speed locus operation mode, a running distance is calculated from the number of footsteps calculated by the step number calculation section 24 and data of a one step movement distance of a user set in advance. A movement locus La is obtained from the running distance and an azimuth calculation value in which the geomagnetic vector V calculated in the azimuth calculation section 28 is detected. Therefore, even inside an underground shopping complex or inside a building in which a GPS radio wave does not reach, as long as it is an area in which the geomagnetism reaches, it is possible to know a movement locus La when a person who holds the movement locus detector 1 walks and the movement locus detector 1 can be used in a navigation device.

Fig. 9 shows the high speed locus operation mode set by the high speed locus operation section 32. In the high speed locus operation mode, a movement locus is obtained from the calculation results of the running distance calculation section 25 and the angular velocity calculation section 29.

In the high speed locus operation section 32, when it is determined that the angular velocity calculated in the angular velocity calculation section 29 is equal to or less than a predetermined standard or less than the standard, almost straight running is determined and a straight movement locus Lb is obtained from the running distance calculation value of the running distance calculation section 25. When the angular velocity calculated in the angular velocity calculation section 29 is determined to be equal to or more than the standard or exceed the standard, a rotational locus Lc is operated from the calculation result of the angular velocity calculation section 29.

From the above, when a person holds a portable device in which the movement locus detector 1 is mounted and walks, even when the person rides a car or the like and moves at a high speed, the movement locus can be detected using the magnetic detection section 2 and the acceleration detection section 12.

### REFERENCE SIGNS LIST

- 1: Movement locus detector
- 2: Magnetic detection section
- 3: X-axis magnetic sensor
- 4: Y-axis magnetic sensor
- 5: Z-axis magnetic sensor
- 6: Magnetic field data detection section
- 12: Acceleration detection section
- 13: X-axis acceleration sensor
- 14: Y-axis acceleration sensor
- 15: Z-axis acceleration sensor
- 16: Acceleration data detection section
- 20: Operation section
- 21: Acceleration data operation section
- 22: Acceleration determination section
- 23: Switching section
- 24: Step number calculation section
- 25: Running distance calculation section
- 26: Coordinate point data operation section
- 27: Data buffer
- 28: Azimuth calculation section
- 29: Angular velocity calculation section
- 31: Low speed locus operation section
- 32: High speed locus operation section
- X0: Standard X-axis
- Y0: Standard Y-axis
- Z0: Standard Z-axis
- V: Geomagnetic vector
- αm: Acceleration vector

## Claims

1. A movement locus detector comprising:
a magnetic detection section; and
an operation section,
wherein a standard three dimensional coordinate having a standard X-axis, a standard Y-axis and a standard Z-axis orthogonal to each other is set,
the magnetic detection section has an X-axis magnetic sensor which detects a magnetic component of the standard X-axis, a Y-axis magnetic sensor which detects a magnetic component of the standard Y-axis, and a Z-axis magnetic sensor which detects a magnetic component of the standard Z-axis,
a direction of a geomagnetic vector is obtained as coordinate point data on the standard three dimensional coordinate based on detection outputs of the X-axis magnetic sensor, the Y-axis magnetic sensor and the Z-axis magnetic sensor in the operation section, and
a low speed locus operation mode in which an azimuth of the geomagnetic vector from the coordinate point data is obtained and a movement locus is operated from the change of the azimuth, and a high speed locus operation mode in which an angular velocity is obtained from the coordinate point data moving on the standard three dimensional coordinate and the movement locus is operated from the change of the angular velocity are switched to be set.

2. The movement locus detector according to Claim 1, further comprising:
an acceleration detection section,
wherein the acceleration detection section has an X-axis acceleration sensor which detects an acceleration component of the standard X-axis, a Y-axis acceleration sensor which detects an acceleration component of the standard Y-axis, and a Z-axis acceleration sensor which detects an acceleration component of the standard Z-axis, and
the number of footsteps from the acceleration change in the gravity direction detected by the acceleration detection section is counted to obtain a movement distance in the low speed locus operation mode, and a movement distance is obtained from the acceleration change in the running direction detected by the acceleration detection section in the high speed locus operation mode.

3. The movement locus detector according to Claim 2, wherein the azimuth of the geomagnetic vector is obtained from a gravity acceleration direction detected by the acceleration detection section and the coordinate point data in the low speed locus operation mode.

4. The movement locus detector according to Claim 2 or 3,
wherein the low speed locus operation mode and the high speed locus operation mode are switched based on the magnitude of the acceleration detected by the acceleration detection section in the operation section.

5. The movement locus detector according to Claim 4,
wherein when the magnitude of the acceleration detected by the acceleration detection section is larger than the gravity acceleration, switching to the high speed locus operation mode is performed in the operation section.

## Amended claims

### Amended claims under Art. 19.1 PCT

1. A movement locus detector comprising:
a magnetic detection section; and
an operation section,
wherein a standard three dimensional coordinate having a standard X-axis, a standard Y-axis and a standard Z-axis orthogonal to each other is set,
the magnetic detection section has an X-axis magnetic sensor which detects a magnetic component of the standard X-axis, a Y-axis magnetic sensor which detects a magnetic component of the standard Y-axis, and a Z-axis magnetic sensor which detects a magnetic component of the standard Z-axis,
a direction of a geomagnetic vector is obtained as coordinate point data on the standard three dimensional coordinate based on detection outputs of the X-axis magnetic sensor, the Y-axis magnetic sensor and the Z-axis magnetic sensor in the operation section, and
a low speed locus operation mode in which an azimuth of the geomagnetic vector from the coordinate point data is obtained and a movement locus is operated from the change of the azimuth, and a high speed locus operation mode in which an angular velocity is obtained from the coordinate point data moving on the standard three dimensional coordinate and the movement locus is operated from the change of the angular velocity are switched to be set.

2. The movement locus detector according to Claim 1, further comprising:
an acceleration detection section,
wherein the acceleration detection section has an X-axis acceleration sensor which detects an acceleration component of the standard X-axis, a Y-axis acceleration sensor which detects an acceleration component of the standard Y-axis, and a Z-axis acceleration sensor which detects an acceleration component of the standard Z-axis, and
the number of footsteps from the acceleration change in the gravity direction detected by the acceleration detection section is counted to obtain a movement distance in the low speed locus operation mode, and a movement distance is obtained from the acceleration change in the running direction detected by the acceleration detection section in the high speed locus operation mode.

3. The movement locus detector according to Claim 2,
wherein the azimuth of the geomagnetic vector is obtained from a gravity acceleration direction detected by the acceleration detection section and the coordinate point data in the low speed locus operation mode.

4. The movement locus detector according to Claim 2 or 3,
wherein the low speed locus operation mode and the high speed locus operation mode are switched based on the magnitude of the acceleration detected by the acceleration detection section in the operation section.

5. The movement locus detector according to Claim 4,
wherein when the magnitude of the acceleration detected by the acceleration detection section is larger than the gravity acceleration, switching to the high speed locus operation mode is performed in the operation section.

6. A movement locus detector comprising:
a magnetic detection section; and
an operation section,
wherein a standard two dimensional coordinate having a standard X-axis and a standard Y-axis orthogonal to each other is set,
the magnetic detection section has an X-axis magnetic sensor which detects a magnetic component of the standard X-axis and a Y-axis magnetic sensor which detects a magnetic component of the standard Y-axis,
a direction of a geomagnetic vector is obtained as coordinate point data on the standard two dimensional coordinate based on detection outputs of the X-axis magnetic sensor and the Y-axis magnetic sensor in the operation section, and
a low speed locus operation mode in which an azimuth of the geomagnetic vector from the coordinate point data is obtained and a movement locus is operated from the change of the azimuth, and a high speed locus operation mode in which an angular velocity is obtained from the coordinate point data moving on the standard two dimensional coordinate and the movement locus is operated from the change of the angular velocity are switched to be set.

7. A movement locus detector comprising:
a magnetic detection section; and
an operation section,
wherein a standard coordinate having at least a standard X-axis and a standard Y-axis orthogonal to each other is set,
the magnetic detection section has at least an X-axis magnetic sensor which detects a magnetic component of the standard X-axis and a Y-axis magnetic sensor which detects a magnetic component of the standard Y-axis,
a direction of a geomagnetic vector is obtained as coordinate point data on the standard coordinate based on at least detection outputs of the X-axis magnetic sensor and the Y-axis magnetic sensor in the operation section, and
a low speed locus operation mode in which an azimuth of the geomagnetic vector from the coordinate point data is obtained and a movement locus is operated from the change of the azimuth, and a high speed locus operation mode in which an angular velocity is obtained from the at least two dimensional coordinate point data moving on the standard coordinate and the movement locus is operated from the change of the angular velocity are switched to be set.
